Europäisches Patentamt

European Patent Office

Office européen des brevets

(19)

(11) Veröffentlichungsnummer : **0 141 250**
**B1**

(12) **EUROPÄISCHE PATENTSCHRIFT**

(45) Veröffentlichungstag der Patentschrift :
**07.09.88**

(21) Anmeldenummer : **84111445.7**

(22) Anmeldetag : **26.09.84**

(51) Int. Cl.⁴ : **A 23 L   2/38**

(54) **Getränk mit einem hohen Gehalt an Magnesium.**

(30) Priorität : **10.10.83 CH 5501/83**

(43) Veröffentlichungstag der Anmeldung :
**15.05.85 Patentblatt 85/20**

(45) Bekanntmachung des Hinweises auf die Patenterteilung : **07.09.88 Patentblatt 88/36**

(84) Benannte Vertragsstaaten :
**AT BE CH DE FR GB IT LI LU NL SE**

(56) Entgegenhaltungen :
**EP-A- 0 085 295**
**DE-A- 2 642 632**
**DE-A- 2 906 697**
**FR-A- 2 310 708**
**GB-A- 2 037 565**
**US-A- 4 325 975**

(73) Patentinhaber : **Natrex Diätetika, E. Baltensperger**
**Im Neutal 194**
**CH-4203 Grellingen (CH)**

(72) Erfinder : **Haigis, Erich M., Dr.**
**Im Neutal 194**
**CH-4203 Grellingen (CH)**
Erfinder : **Baltensperger, Esther**
**Im Neutal 194**
**CH-4203 Grellingen (CH)**

Jouve, 18, rue St-Denis, 75001 Paris, France

**Beschreibung**

Die vorliegende Erfindung bezieht sich auf ein Getränk mit einem hohen Gehalt an Magnesium, durch den eine Verbesserung des Calcium : Magnesium Quotienten in der Ernährung erzielt werden kann. Verschiedene Ausführungen dieses Getränks werden in den einzelnen Unteransprüchen charakterisiert und betreffen geschmacksneutrale, süsse als auch saure und bittere Tafelgetränke, trinkbare, nährstoffhaltige Flüssigkeiten sowie Brühen, Suppen und Trinkbouillons.

Neuere klinische Untersuchungen weisen darauf hin, dass die übermässige Aufnahme von Calcium einerseits und die mangelnde Zufuhr von Magnesium andererseits bedeutende Faktoren in der Entstehung von arteriosklerotischen Gefässerkrankungen sind. Dabei sind nicht allein die effektiv aufgenommenen Mengen dieser Mineralien sondern auch deren gegenseitiges Mengenverhältnis für den Organismus von wesentlicher Bedeutung. Der durchschnittliche Quotient von Calcium : Magnesium in der täglichen Nahrung ist eine richtungsweisende Grösse, die mit der koronaren und cerebralen Infarkthäufigkeit korreliert. Durch Getränke, die kein oder nur wenig Calcium enthalten aber reich an Magnesium sind, kann eine vorteilhafte Verschiebung des Calcium : Magnesium Quotienten der Nahrung erzielt werden.

Um diesen Calcium : Magnesium Quotienten der gesamten Nahrungsaufnahme durch ein Tafelgetränk hinreichend beeinflussen zu können, hat die Differenz zwischen dem Magnesium- und Calcium-Anteil relativ gross zu sein. Im Sinne dieser Erfindung ist dies durch Getränke, deren Magnesium-Gehalt mehr als 144 mg/Liter (5.9 mMol/Liter) beträgt, möglich. Der Anteil an Calcium soll dabei möglichst gering sein und gemessen in Mol-Anteilen weniger als 1 % der Magnesium-Konzentration betragen.

Solche Getränke kommen in natura nicht vor ; sie sind gewerblich oder industriell herzustellen. Diese spezifische, im Sinne dieser Erfindung definierte Art eines magnesiumreichen aber calciumarmen Getränks, kann in verschiedenen Varianten, wie sie in den einzelnen Unteransprüchen formuliert sind, hergestellt werden und Spezifikationen hinsichtlich Mineralstoffen, Spurenelementen, Süssstoffen, Aromata, Nährstoffen und Vitaminen, etc. enthalten.

## Bisheriger Stand der Technik

Der Gedanke, durch spezielle Elektrolyt-Getränke korrigierend in den Mineralhaushalt des Körpers einzugreifen, ist nicht neu. Etliche Patentschriften befassen sich mit der Frage der optimalen Elektrolyt-Substitution durch Getränke nach sportlichen Leistungen. Eur. Pat. 0 040 654 und UK. Pat. 2 037 565 beschreiben ein Elektrolyt-Konzentrat, dessen Anteil an Magnesium-Ionen jedoch auf 3 mMol = 72.94 mg pro 10 Gramm Trockengewicht, bzw. pro Liter Getränk begrenzt ist.

US Pat. 4 325 975 beschreibt die Herstellung eines Getränks mit spezieller Elektrolyt-Zusammensetzung, welches zur Verhütung von kardiovaskulären Erkrankungen geeignet sein soll. Es werden spezifische Mengen an Strontium, Magnesium, Calcium und Lithium festgelegt. Der maximale Magnesium-Gehalt wird zu 4.11 mMol/Liter = 100 mg/Liter definiert. Diese Getränke enthalten zudem bedeutende Mengen an Calcium.

BRD Pat. 26 20 349 und US Pat. 4 038 421 beschreiben alkoholfreie Getränke, welche neben Galactose, Riboflavin und Nikotinsäure auch Mineralstoffe und einzelne Aminosäuren enthalten. Der Magnesium-Gehalt dieser Getränke wird zu maximal 5.9 mMol pro Liter = 144 mg/Liter festgelegt.

BRD Pat. 29 06 697 beschreibt eine unüberschaubare Fülle von Kombinationen an Natrium, Kalium, Magnesium und Calcium für oral einzunehmende Produkte. Das Patent bezieht sich auf kristalline Salzkombinationen, die als Tafelsalz in Form von Tabletten oder Kapseln, aber auch als Getränke, Milchprodukte, Käse, Wurstwaren, usw. oral eingenommen werden können. Mit diesem Patent ist zweifelsohne auch das Meersalz und das Meerwasser patentiert ! Die verschiedenen Patentansprüche lassen sich hinsichtlich ihrer physiologischen Zweckmässigkeit kaum auf einen Nenner bringen. Gemäss den Patentansprüchen 1 und 2 wird die molare Proportion von Magnesium zu Calcium zu maximal 100 : 1 festgelegt. Ein grösserer Anteil von Magnesium in Relation zu Calcium wird nicht beansprucht.

BRD Pat. 17 67 652 beschreibt ein isotonisches Getränk mit einer speziellen Zusammensetzung zur Elektrolyt-Substitution nach körperlicher Anstrengung. Magnesium wird darin jedoch nicht erwähnt. Ebenso beschreibt BRD Pat. 26 42 632 ein hypotonisches Elektrolyt-Gemisch, welches Natrium, Kalium, Chlorid und Phosphat nicht aber Magnesium enthält. Entsprechend sind die Patentschriften UK. Pat. 1 541 461, NL. Pat. 7 610 539 und Französiches Pat. 76 28 612.

## Beschreibung der neuen Erkenntnisse

Die zitierten Patentschriften befassen sich mit Getränken, die aufgrund ihrer besonderen Elektrolyt-Zusammensetzungen einen optimalen Effekt auf den menschlichen Organismus in speziellen Situationen wie nach übermässigem Flüssigkeits- und Salzverlust infolge sportlicher Anstrengung, infolge übermässigen Schwitzens durch Hitze oder Fieber, infolge Diarrhoe, usw. geltend machen. Die Getränke sind zur Substitution von Wasser und Elektrolyten konzipiert und basieren auf möglichst ausgewogenen Mineralsalz-Kombinationen, welche diesen Zielsetzungen weitgehend gerecht werden.

Ueberrraschenderweise muss festgestellt werden, dass weder natürlich vorkommende, noch industriell hergestellte Getränke existieren, die im Sinne der vorliegenden Erfindung bezüglich der Magnesium- und Calcium-Anteile als Extrem-Getränke zu bezeichnen wären. Hiermit wird ein solches Extrem-Getränk formuliert. Ein Getränk, dessen Zusammensetzung hinsichtlich der Magnesium-Menge oder hinsichtlich der gegenseitigen Proportion von Magnesium und Calcium nicht als ausgewogen, sondern als extrem disproportional zu bezeichnen ist. Ein Getränk, dessen physiologischer Wert nicht in sich selbst, sondern erst unter Beachtung der Gesamternährung erkannt und begründet werden kann. Die Erfindung basiert auf einer neuen medizinischen Erkenntnis und bietet die Möglichkeit, der eklatanten Fehlernährung bezüglich der täglichen Magnesium- und Calcium-Aufnahme entgegenzuwirken.

## Weg zur Ausführung der Erfindung (Beispiel)

| | | | |
|---|---|---|---|
| - Magnesium-Ionen | $Mg^{++}$ | 5.96mMol | 145mg |
| - Calcium-Ionen | $Ca^{++}$ | 0.05mMol | 2mg |

- Weitere Mineralstoffe wie z.B. $Na^+$, $K^+$, $Zn^{++}$, $Mn^{++}$, $Cl^-$, $SO_4^{--}$, $CO_2/HCO_3^-$ in beliebigen, physiologisch zuträglichen Mengen.

| | |
|---|---|
| - Saccharose | 4g |
| - Zitrusfruchtaroma (Orangen) | 180mg |
| - Trinkwasser demineralisiert | ad 1'000ml |

Die Demineralisierung des Trinkwassers ist besonders im Hinblick auf einen niederen Calcium-Gehalt hin auszurichten und zu überwachen.

Die aufgeführte Zusammensetzung hält eine gemäss dieser Erfindung festgelegte untere Magnesium-Konzentration als ein Beispiel fest. Untersuchungen haben ergeben, dass die Magnesium-Konzentration in Getränken vom physiologischen als auch vom palativen Standpunkt her ohne weiteres 200 mg pro Liter betragen kann.

**Patentansprüche**

1. Getränk, welches dadurch gekennzeichnet ist, dass der Magnesium-Gehalt mehr als 144 mg/Liter (5.9 mMol/Liter) und der Calcium-Gehalt in Mol-Anteilen weniger als 1 % der Magnesium-Konzentration beträgt.

2. Getränk nach Anspruch 1, dadurch gekennzeichnet, dass es weitere Mineralstoffe als auch Spurenelemente enthält.

3. Getränk nach Anspruch 1, dadurch gekennzeichnet, dass es natürliche und/oder künstliche Süss- und Aromastoffe enthält.

4. Getränk nach Anspruch 1, dadurch gekennzeichnet, dass es wässrige und/oder Pflanzenblättern und/oder Früchten und/oder Nüssen und/oder Kernen und/oder Wurzeln und/oder Pilzen enthält.

5. Getränk nach Anspruch 1, dadurch gekennzeichnet, dass es natürliche Metabolite, z. B. Citrat, Succinat, Fumarat, Malat enthält.

6. Getränk nach Anspruch 1, dadurch gekennzeichnet, dass es Kohlensäure und/oder andere organische Säuren zur Stabilisierung und Geschmacksverbesserung enthält.

7. Getränk nach Anspruch 1, dadurch gekennzeichnet, dass es Proteine und/oder Kohlenhydrate und/oder Lipide als Nährstoffe enthält.

8. Getränk nach Anspruch 1, dadurch gekennzeichnet, dass es Fleischextrakte und/oder Geflügelextrakte und/oder Fischextrakte enthält und eine nährstoffhaltige Brühe, eine Suppe oder eine Trinkbouillon ist.

9. Getränk nach Anspruch 1, dadurch gekennzeichnet, dass es Gewürze enthält.

10. Getränk nach Anspruch 1, dadurch gekennzeichnet, dass es Vitamine enthält.

**Claims**

1. A beverage, which is characterized in that the content of magnesium is higher than 144 mg per litre (5.9 mmoles per litre) and in that the content of calcium in parts of moles is less than 1 % of the magnesium-concentration.

2. A beverage according to claim 1, further characterized in that it contains minerals as well as oligo-elements.

3. A beverage according to claim 1, further characterized in that it contains and is made tasty by adding natural and/or artificial sweeteners and aromatics.

4. A beverage according to claim 1, further characterized in that it contains aqueous and/or alcoholic extracts and distillates from blossoms and/or leaves of plants and/or fruits and/or nuts and/or kernels of fruits and/or roots and/or mushrooms.

5. A beverage according to claim 1, further characterized in that it contains natural metabolites, such as citrate, succinate, fumarate, malate, etc.

6. A beverage according to claim 1, further characterized in that it contains $CO_2$ and/or other organic acids to improve stabilization and taste.

7. A beverage according to claim 1, further characterized in that it contains nutrients such as proteins and/or carbohydrates and/or lipids.

8. A beverage according to claim 1, further characterized in that it contains extracts of meat and/or extract of poultry meat and/or extracts of fish and thus represents a nutritious brewing (soup) and/or a clear soup (bouillon).

9. A beverage according to claim 1, further characterized in that it is made tasty by adding spices.

10. A beverage according to claim 1, further characterized in that it contains vitamines.


**Revendications**

1. Boisson caractérisée par une teneur en magnésium supérieure à 144 mg/l (5.9 mMol/l) et une teneur en calcium (en Mol-g/l) inférieure à 1 % de la concentration de magnésium.

2. Boisson selon revendication 1, caractérisée par le présence d'autres substances minérales, y compris des oligo-éléments.

3. Boisson selon revendication 1, caractérisée par la présence d'édulcorants et d'aromatisants naturels et/ou artificiels.

4. Boisson selon revendication 1, caractérisée par la présence d'extraits et de distillats aqueux et/ou alcooliques provenant de fleurs et/ou de feuilles, de fruits et/ou de noix et/ou de noisettes, de noyaux et/ou de pépins, de racines et/ou de champignons.

5. Boisson selon revendication 1, caractérisée par la présence de métabolites naturels tels que le citrate, le succinate, le fumarate ou le malate.

6. Boisson selon revendication 1, caractérisée par la présence de $CO_2$ et/ou d'autres acides organiques qui servent à la stabiliser ou à améliorer sa saveur.

7. Boisson selon revendication 1, caractérisée par la présence d'éléments nutritifs sous forme de protéines et/ou de glucides et/ou de lipides.

8. Boisson selon revendication 1, caractérisée par la présence d'extraits de viande et/ou de volailles et/ou de poisson, et consistant ainsi en une soupe, un bouillon ou un consommé contenant des principes nutritifs.

9. Boisson selon revendication 1, caractérisée par la présence de condiments.

10. Boisson selon revendication 1, caractérisée par la présence de vitamines.